# EUROPÄISCHE PATENTSCHRIFT

(11) **EP 0 890 726 B1**
(45) Veröffentlichungstag und Bekanntmachung des Hinweises auf die Patenterteilung: **23.02.2005**
(21) Anmeldenummer: 98110044.9
(22) Anmeldetag: 29.05.1998
(51) Int. Cl.: F02F 1/42, F02B 3/06

(54) **Vierventil-Blockzylinderkopf mit schräg angeordneten Gaswechselventilen**
Four valve cylinder head with inclined valve arrangement
Culasse à quatre soupapes agencées inclinées

(30) Priorität: 12.07.1997 DE 19729947
(43) Veröffentlichungstag der Anmeldung: 13.01.1999
(73) Patentinhaber: DEUTZ Aktiengesellschaft, 51063 Köln (DE)
(72) Erfinder: Bauer, Lothar, 51109 Köln (DE); Oswald, Peter, 51491 Overath (DE)

(56) Entgegenhaltungen:
- EP-A- 0 780 560
- DE-A- 4 031 461
- DE-A- 4 315 233
- DE-A- 4 323 073
- DE-C- 902 200
- GB-A- 2 164 703

## Beschreibung

Die Erfindung betrifft eine selbstzündende Brennkraftmaschine mit einem Zylinderkopf, die weiterhin ein Kurbelgehäuse und eine darin drehbar gelagerte Kurbelwelle aufweist, an der jeweils mit einem Kolben verbundene Pleuel angelenkt sind, wobei der Kolben in einem von dem Zylinderkopf abgedeckten Zylinder unter Bildung eines Brennraums bewegbar ist, wobei im Bereich des Zylinderkopfs zwei Nockenwellen angeordnet sind, die je Zylinder Gaswechselventile, insbesondere zwei Einlassventile und zwei Auslassventile steuern, wobei die Einlassventile und die Austassventile mit den Ventilschäften zu den Zylinderkopflängsseitenwänden nach außen geneigt angeordnet sind, weiterhin ein Einspritzventil in eine zentrale Ausnehmung einsetzbar ist, die als von schmierölführenden und/oder kühlmittelführenden Räumen getrennter Bereich ausgebildet ist, und sich die Ausnehmung vom Brennraum zumindest bis in Höhe der Nockenwellenachsen erstreckt,

Ein derartiger Zylinderkopf ist aus der EP 0 780 560 A1 bekannt. Der in diesem Dokument beschriebene Zylinderkopf ist aufwendig konstruiert und entsprechend aufwendig herzustellen und zu montieren. So sind die Achsen der Ventilschäfte nicht zu den Achsen der beiden oben liegenden Nockenwellen ausgerichtet, so dass noch zusätzliche Schlepphebel zur Überwindung des sich ergebenden Versatzes zwischen den Nockenwellen und den Gaswechselventilen eingesetzt werden müssen. Die Zylinderkopfschrauben sind zumindest teilweise so angeordnet, dass sie genau im Bereich unterhalb von Nocken der Nockenwelle liegen. Damit ist vorgegeben, dass der Nockenwellenrahmen nach der Montage des Zylinderkopfes auf dem Kurbelgehäuse montiert werden muss. Aus der DE 43 23 073 A1 ist eine weitere Brennkraftmaschine mit einem Zylinderkopf bekannt, bei der ebenfalls zwei oben liegende Nockenwellen im Zylinderkopf gelagert sind. Dabei werden die Nockenwellen von einem Nockenwellenlagerrahmen an dem Zylinderkopf befestigt, wobei der Nockenwellenlagerrahmen gleichzeitig eine Deckelfunktion hat und den darunter liegenden ölführenden Zylinderkopfraum zur Umgebung abdeckt. Auch bei dieser Brennkraftmaschine sind die Ventilachsen nicht zu den Nocken der Nockenwelle ausgerichtet, so dass auch hier Schlepphebel montiert werden müssen. Der Nockenwellenlagerrahmen kann bauartbedingt erst nach der Montage des Zylinderkopfs auf dem Kurbelgehäuse der Brennkraftmaschine montiert werden.

Schließlich ist aus der GB 2164703 A ebenfalls ein Zylinderkopf für eine Brennkraftmaschine bekannt. Auch hier weist der Zylinderkopf zwei oben liegende Nockenwellen auf, die mittels einzelner Lagerblöcke auf dem Zylinderkopf befestigt sind. Die Besonderheit der Nockenwelle liegt darin, dass diese im Bereich der Zylinderkopfschrauben Ausnehmungen aufweisen, die so bemessen sind, dass die Zylinderkopfschrauben bei montierten Nockenwellen eingesetzt und verschraubt werden können.

Der Erfindung liegt die Aufgabe zugrunde, einen Zylinderkopf bereitzustellen, der als Blockzylinderkopf so konstruiert ist, dass eine zuverlässige Trennung von schmierölführenden oder kühlmittelführenden Räumen gegenüber Bereichen sichergestellt ist, in die Kraftstoff gelangen kann.

Diese Aufgabe wird durch eine selbszündende Brennkraftmaschine mit einem Zylinderkopf gemäß Anspruch 1 gelöst.

Zunächst wird durch die geneigte Anordnung der Ventilschäfte der Einlassventile und der Auslassventile insbesondere im Bereich zwischen den Nockenwellen so viel Platz gewonnen, dass in diesem Bereich von schmierölführenden und/oder kühlmittelführenden Räumen getrennte Ausnehmungen für das Einspritzventil und eine Glühkerze darstellbar sind.

Dabei weist der Zylinderkopf (der Blockzylinderkopf ist zur Sprachvereinfachung immer Zylinderkopf genannt) eine durch die Nockenwellenachsen verlaufende Trennebene auf, an die sich ein Nockenwellenlagerrahmen anschließt, wobei die Nockenwellen zwischen Zylinderkopf und Nockenwellenlagerrahmen gelagert sind. Die Ausnehmung erstreckt sich als getrennter Bereich durch den Nockenwellenlagerrahmen hindurch und mündet in einen Montageraum im oberen Nockenwellenlagerrahmen. Dadurch sind das Einspritzventil und der Glühstift (je Zylinder) vollkommen von schmierölführenden und kühlmittelführenden Räumen getrennt. Die Ausnehmung und die Zweitausnehmung münden in einen gemeinsamen Montageraum, der im oberen Bereich des Nockenwellenlagerrahmens angeordnet ist und sich entlang des Zylinderkopfs erstreckt. In diesem Zusammenhang ist auch die Aufteilung des Zylinderkopfs in einen Zylinderkopf und einen Nockenwellenlagerrahmen aus mehreren Gründen sinnvoll. Zunächst einmal wird durch die Aufteilung die Gießform des Zylinderkopfs einfacher. Zudem können der Zylinderkopf und der Nockenwellenlagerrahmen aus unterschiedlichen Materialien hergestellt sein, wobei der Zylinderkopf insbesondere aus Grauguss oder einer höherwertigen Leichtmetalllegierung und der Nockenwellenlagerrahmen aus einer Standardleichtmetalllegierung gießbar sind. Dadurch ergeben sich Gewichtsvorteile. Die Trennung zwischen Zylinderkopf und Nockenwellenlagerrahmen im Bereich der Nockenwellenachsen bietet den Vorteil, dass insgesamt die Montage der einzelnen Bauteile vereinfacht wird. So kann der Zylinderkopf in einfacher Art und Weise mit Einlass- und Auslassventilen bestückt werden und darüber hinaus direkt auf die Ventilschäfte wirkende Hydrostößel in entsprechend bearbeitete Bohrungen eingesetzt werden. In den so vormontierten Zylinderkopf werden dann die Nockenwellen eingelegt und durch Montage des Nockenwellenlagerrahmens fixiert. Die Abdichtung des Nockenwellenlagerrahmens gegenüber dem Zylinderkopf erfolgt durch Gummiformdichtungen und/oder Runddichtringe, die in Dichtnutbereiche des Nockenwellenlagerrahmens und/oder Zylinderkopfes einsetzbar sind. Dadurch ist eine zuverlässige Abdichtung gewährleistet, die auch nach einer Demontage mit den vorhandenen Gummiformdichtungen und/oder Runddichtringen wieder sicher abdichtbar ist.

In Weiterbildung der Erfindung sind die Nockenwellen so zu den Zylinderkopfschrauben angeordnet, dass bei eingelegten Nockenwellen und aufgeschraubten Nockenwellenlagerrahmen die Zylinderkopfschraubenköpfe in der Form zugänglich sind, dass die Nockenwellenschäfte im Bereich der Nockenwellenschrauben Abflachungen aufweisen. Hierbei ist zunächst die Grundüberlegung, dass der Zylinderkopf und der Nockenwellenlagerrahmen als komplette Baueinheit vormontiert werden und diese Baueinheit dann auf das Kurbelgehäuse der Brennkraftmaschine aufgesetzt wird und mittels Zylinderkopfschrauben befestigt wird. Die Nockenwellen sind in diesem Zusammenhang bewußt soweit in den Montagebereich der Zylinderkopfschrauben verlegt worden, daß diese durch Abflachungen in dem Bereich der Nockenwellenschäfte montiert werden können.

In Weiterbildung der Erfindung weisen die Einlaßgaswechselventilkanäle eine zur Trennebene im stumpfen Winkel ausgebildete gemeinsame Mündungsfläche auf, an die eine Luftansaugleitung anschließbar ist. Dadurch können die Gießkerne der Einlaßwechselventilkanäle einfach in der Gießform fixiert werden und die Gießkerne nach dem Gießvorgang problemlos vollständig entfernt werden.

Weiterhin sind die Einlaßkanäle eines Zylinders als ein Drallkanal und ein Tangentialkanal ausgebildet, während die beiden Auslaßventile zu einem Hosenkanal zusammengefaßt sind und im rechten Winkel zur Zylinderkopffläche in der Zylinderkopflängsfläche münden. Diese Ausbildung ermöglicht eine klare Trennung der Einlaßkanäle und Auslaßkanäle, wobei insbesondere die thermisch hochbelasteten Auslaßkanäle auf kurzem Wege von dem Brennraum zu der Zylinderkopflängsfläche geführt sind. Der Tangentialkanal und der Drallkanal eines Zylinders sind so geführt, daß der Tangentialkanal von einer Zylinderquerseite (gemeint sind die Seiten zwischen und am Ende der Zylinder quer zu der Zylinderlängsachse) über die Zylindermitte auf die zweite Zylinderseite hin geführt ist, während der zugehörige Drallkanal hinter einer Zylinderkopfschraubenpfeife her von der zweiten Zylinderseite zu der ersten Zylinderseite des danebenliegenden Zylinders geführt ist.

Vorzugsweise wird der Zylinderkopf und der Nockenwellenlagerrahmen mit den zugehörigen Bauteilen in der Form montiert, daß
I. der Zylinderkopf vormontiert wird (Gaswechselventile usw.),
II. die Nockenwellen in die Nockenwellenlagerstellen des Zylinderkopfs eingesetzt werden,
III. der Nockenwellenlagerrahmen auf den Zylinderkopf aufgesetzt wird und mit den Nockenwellenlagerrahmen-Befestigungsschrauben auf dem Zylinderkopf festgeschraubt wird und
IV. der Zylinderkopf mit montiertem Nockenwellenlagerrahmen sowie ggf. montierten Einspritzventilen und Glühstiften auf das Kurbelgehäuse aufgesetzt und mit Zylinderkopfschrauben befestigt wird.

Der gesamte Zylinderkopf mit dem Nockenwellenlagerrahmen ist also in der weitestgehenden Version komplett montierbar und auf das Kurbelgehäuse aufsetzbar. Andererseits ist der Nockenwellenlagerrahmen aber auch beispielsweise zu Reparaturzwecken alleine demontierbar.

Alternativ ist es aber auch möglich die Nockenwellen beispielsweise mit Lagerbrücken an entsprechend ausgestalteten Lagerstühlen in dem Nockenwellenlagerrahmen zu befestigen. Die so vormontierte Baueinheit wird dann komplett auf den Zylinderkopf aufgesetzt und dieser auf das Kurbelgehäuse montiert. Weiterhin ist vorgesehen, daß in den Montageraum je zugeordneten Zylinder eine Öffnung in Höhe des Einspritzventilhochdruck-Anschlusses einmündet, die sich zu einer Seitenwand des Nockenwellenlagerrahmens erstreckt. Diese Öffnung ist selbstverständlich auch wieder vollkommen getrennt von den zuvor genannten und erläuterten Schmierölräumen in dem Nokkenwellenlagerrahmen und zusätzlichen Kühlmittelräumen in dem Zylinderkopf. Durch diese Öffnung, die vorteilhaft beim Gießen ausgespart wird, können dann die Einspritzleitung und ggf. das Anschlußkabel zu einem zugeordneten Glühstift durchgeführt werden, die dann in dem Montageraum mit den zugeordneten Bauteilen verschraubt werden. Insbesondere mit dem noch später erläuterten Montageraumverschlußdeckel, der oberhalb des Montageraumes angebracht wird, ergibt sich somit ein im wesentlichen bis auf ggf. eingelassene Schriftzüge glattflächiges Bild der Brennkraftmaschine auf der Zylinderkopfseite. Sind hier die Anforderungen nicht so hoch, können die Einspritzleitung selbstverständlich ebenso wie die Anschlußleitungen für die Glühstifte und andere elektrische Kabel (z. B. bei Common-Rail) nach oben aus dem Montageraum herausgeführt werden. Die Ausnehmung und/oder die Zweitausnehmung können eine seitliche Entsorgungsöffnung aufweisen. Diese Entsorgungsöffnung ist vorteilhaft an geodätisch tiefer Stelle insbesondere der Zweitausnehmung im Zylinderkopf angeordnet. Durch diese Entsorgungsöffnung kann beispielsweise in den Montageraum bzw. die Ausnehmung oder die Zweitausnehmung eingedrungenes Wasser (beispielsweise bei einem Reinigungsvorgang) abgeführt werden, so daß die zuvor genannten Räume im Betrieb der Brennkraftmaschine immer "trocken" bleiben. Diese ebenfalls jedem Zylinder zugeordnete Entsorgungsbohrung kann gebohrt sein. Der Nockenwellenlagerrahmen bildet vorteilhaft die Abdeckung einer Luftansaugleitung. Dabei ist die Luftansaugleitung vorzugsweise in dem unteren Teil durch den Zylinderkopf gebildet und in dem geschilderten oberen Bereich durch den Nockenwellenlagerrahmen. Dadurch wird auch für dieses Funktionsteil der Herstellungs- und Montageaufwand minimiert. In den Nockenwellenlagerrahmen und/oder Zylinderkopf kann ein Beruhigungsraum für Blow-By-Gase integriert sein. In diesem Beruhigungsraum werden die Ölbestandteile des Blow-By-Gases weitgehend ausgeschieden und dem Ölkreislauf der Brennkraftmaschine wieder zugeführt.

In Weiterbildung der Erfindung ist stirnseitig an den Nockenwellenlagerrahmen ein Zahnräderraum angeformt, in dem die Nockenwellenzahnräder der Nockenwelle angeordnet sind. Dabei ist es so, daß die beiden Nockenwellen einerseits von einem Zahnriementrieb angetrieben werden, wobei dieser Zahnriementrieb mit einem auf einer ersten Nockenwelle außerhalb des Zahnräderraums angeordneten Zahnriemenrad zusammenwirkt. Der Zahnriemen wird von einer Zwischenwelle (Einspritzpumpenwelle) angetrieben, die wiederum von der Kurbelwelle angetrieben ist, wobei eine Spannrolle für den Zahnriemen an dem Zylinderkopf befestigt ist. Axial neben dem Zahnriemenrad sind die beiden Nockenwellenzahnräder vorgesehen, die miteinander kämmen, so daß die erste angetriebene Nockenwelle somit die zweite Nockenwelle antreibt. Das Nockenwellenzahnrad der zweiten Nockenwelle bildet dann den Antrieb einer Vakuumpumpe, die in beziehungsweise an einer Ausnehmung im Zylinderkopf seitlich unterhalb des zweiten Nockenwellenzahnrads montierbar ist. Vorgesehen kann auch sein, daß die Nockenwellenzahnräder eine Zahnradpumpe beispielsweise für Schmieröl bilden. Der Nockenwellenlagerrahmen kann eine integrierte Deckelplatte aufweisen, die von dem Montageraum durchbrochen ist und die Öffnungen für Zylinderkopfschrauben und für Nockenwellenlagerrahmen-Befestigungsschrauben aufweist. Dieser "geschlossene" Nockenwellenlagerrahmen bietet den Vorteil großer Steifheit. Andererseits müssen Öffnungen für die Zylinderkopfschrauben und für die Nockenwellenlagerrahmen-Befestigungsschrauben vorgesehen sein, die dann durch entsprechende Verschlußkappen wieder verschlossen werden können. In alternativer Ausgestaltung ist vorgesehen, daß der Nockenwellenlagerrahmen von einem separaten Deckel abdeckbar ist, wobei der Deckel im Bereich des Montageraums durchbrochen ist. Diese Ausführung erfordert einen separaten Deckel zur Abdeckung insbesondere des Ölraums in dem Nockenwellenlagerrahmen, wobei aber durch diese Öffnung der Zugang zu den genannten Zylinderkopfschrauben und Nockenwellenlagerrahmen-Befestigungsschrauben in einfacher Art und Weise gegeben ist. Im Gegensatz zu bekannten Ventildeckel kann dieser Dekkel als im wesentlichen glattflächiges Bauteil ausgebildet sein, was insofern den Herstellungsaufwand und Befestigungsaufwand reduziert. Die Deckelplatte bzw. der Deckel ist im Bereich des Durchbruchs für den Montageraum von einem Montageraumverschlußdeckel abdeckbar. Dieser Montageraumverschlußdeckel kann als einfaches Plastikteil ausgeführt sein, da an diesen keine besonderen Ansprüche bezüglich Dichtheit gestellt werden. Der Nockenwellenlagerrahmen weist endseitig zu und zwischen den Zylindern Nockenwellenlagerstellen für jede Nockenwelle auf. Dies garantiert auch im Zusammenhang mit den Abflachungen im Schaftbereich der Nockenwellen eine hohe Steifheit des Gesamtsystems und damit eine weitere Reduzierung der Geräuschemissionen. In dem Zahnräderraum des Nockenwellenlagerrahmens sind axiale Lagerflächen vorgesehen, an die die Nockenwellenzahnräder anliegen. Diese Ausbildung gewährleistet mit einfachen Mitteln eine kostengünstig realisierbare Axialführung der Nockenwellen. Der Nockenwellenlagerrahmen weist gegossene Tassenstößelüberprüfungsöffnungen auf, so daß diese jederzeit ohne aufwendige Demontagen überprüft werden können. Dabei ist in weiterer Ausgestaltung der Nockenwellenlagerrahmen so ausgebildet, daß er insbesondere aus Leichtmetall druckgießbar ist. Weiterhin kann der Nockenwellenlagerrahmen Anschraubsättel für ein Common-Rail aufweisen, das wahlweise anstelle einer konventionellen Einspritzpumpe verwendet werden kann.

Schließlich ist noch allgemein zu vermerken, daß der Nockenwellenlagerrahmen bei Ausbildung der Brennkraftmaschine als vierzylindrige Brennkraftmaschine über für jede Nockenwelle sechs Nockenweitenlagerstellen verfügt, die im Bereich des Einspritzventils quer zur Motorlängsachse angeordnet sind. Weiterhin weist der Nockenwellenlagerrahmen stirnseitig diagonal gegenüberliegend angeordnete angegossene oder angeschraubte Transportösen auf. Schließlich ist es so, daß der Nockenwellenlagerrahmen zur weiteren Verringerung der Geräuschemissionen mit insbesondere innenliegenden Verrippungen versehen ist. Zudem übernimmt der Nockenwellenlagerrahmen weitere Zusatzfunktionen und Hilfsfunktionen, die nachfolgend stichpunktartig aufgeführt sind:
- in den Nockenwellenlagerrahmen ist eine Kühlmittelsammelleitung eingelassen,
- in dem Nockenwellenlagerrahmen ist eine Schmieröleinfüllvorrichtung vorgesehen,
- die Ableitung der Blow-By-Gase vom Ölabscheider zur Verdichterseite des Abgasturboladers erfolgt über eine Querbohrung, die in den Nockenwellenlagerrahmen eingelassen ist,
- die Wasserführung vom Abgaskühler zum Zylinderkopf ist in den Nockenwellenlagerrahmen eingelassen,
- der Nockenwellenlagerrahmen übernimmt eine Tragfunktion für einen zu montierenden Ölabscheider und
- der Nockenwellenlagerrahmen hat angegossene Halterungen für zu verlegende Kraftstoffniederdruckleitungen und elektrische Kabel.

Die folgende Zeichnungsbeschreibung erläutert weitere vorteilhafte Ausgestaltungen der Erfindung, die in den Zeichnungen dargestellt sind.

Es zeigen:
- Fig. 1:: einen mittigen Längsschnitt durch Zylinderkopf und Nokkenwellenlagerrahmen mit separatem Deckel,
- Fig. 2a:: einen Querschnitt durch Zylinderkopf und Nockenwellenlagerrahmen mit integrierter Deckelplatte,
- Fig. 2b:: einen weiteren Querschnitt durch Zylinderkopf und Nokkenwellenlagerrahmen mit integrierter Deckelplatte,
- Fig. 3:: einen Querschnitt durch einen Zylinderkopf und einen Nockenwellenlagerrahmen mit separatem Deckel und alternativen Leitungsführungen für die Einspritzleitungen,
- Fig. 4:: einen Querschnitt durch den Zylinderkopf mit eingesetztem Ventilen Hydrostößeln und Nockenwellen,
- Fig. 5:: einen Querschnitt durch den Zylinderkopf und den Nokkenwellenlagerrahmen mit integrierter Deckelplatte und separater Abdeckung der Luftansaugleitung,
- Fig. 6:: einen Schnitt durch den Zylinderkopf,
- Fig. 7:: eine Ansicht einer Zylinderkopflängsseitenwand und
- Fig. 8:: eine Ansicht einer Zylinderkopf-Anschraub-Dichtfläche zum Nockenwellenlagerrahmen.

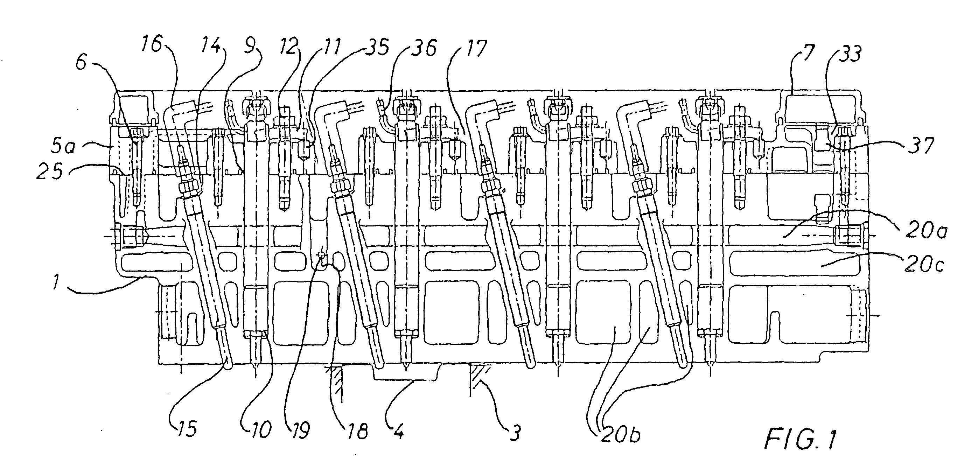

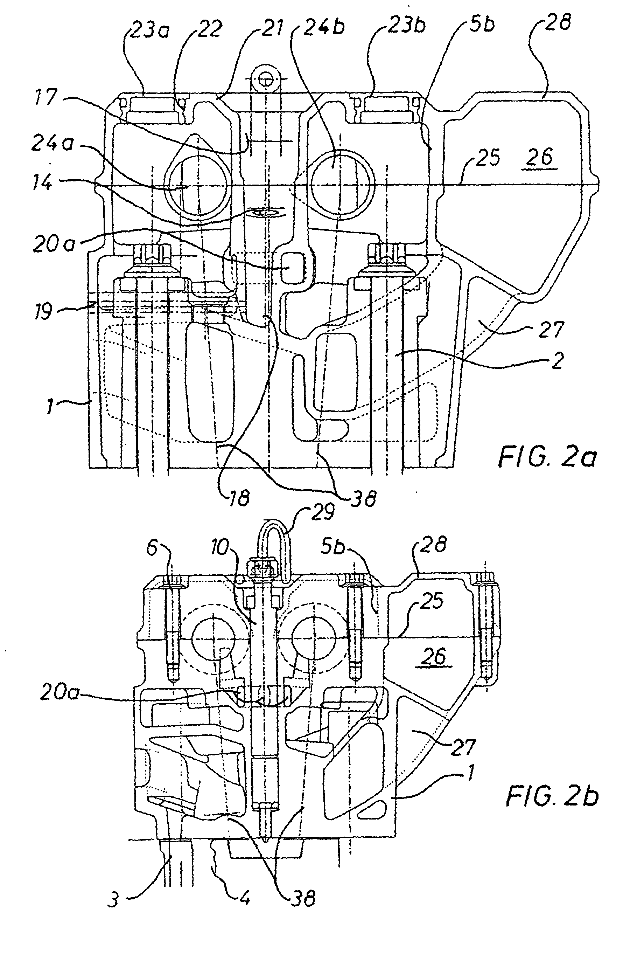

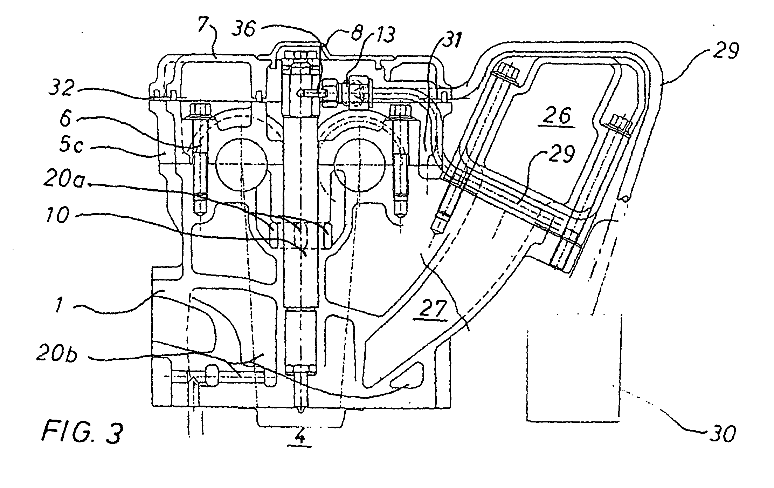

Der in Fig. 1 teilweise dargestellte Zylinderkopf 1 ist ein Vierventil-Zylinderkopf für eine vierzylindrige selbstzündende Brennkraftmaschine. Der Zylinderkopf 1 ist mit Zylinderkopfschrauben 2 (Fig. 2) auf dem Kurbelgehäuse einer Brennkraftmaschine verschraubt, wobei in Fig. 1 ein Zylinder 3 und ein Kolben 4 angedeutet sind.

Der Zylinderkopf 1 ist abgedeckt von einem Nockenwellenlagerrahmen 5a, der mit Nockenwellenlagerrahmen-Befestigungsschrauben 6 auf dem Zylinderkopf 1 festgeschraubt ist. Auf den Nockenwellenlagerrahmen 5a ist ein separater Deckel 7 aufgesetzt, der wiederum von einem Montageraumverschlußdeckel 8 abgedeckt ist. In den Nockenwellenlagerrahmen 5a ist je Zylinder eine Ausnehmung 9 eingelassen, die sich durch den Zylinderkopf 1 bis in den in den Kolben 4 eingelassenen Brennraum fortsetzt. In dieser Ausnehmung 9 ist ein Einspritzventil 10 eingesetzt, das mit einer Befestigungspratze 11 mit einer Einspritzventil-Befestigungsschraube 12 auf einem Stützelement 35 befestigt ist. Das Einspritzventil 10 weist einen seitlichen Einspritzventil-Hochdruckleitungsanschluß 13 und einen Leckölleitungsanschluß 36 auf. Die Ausnehmung 9 ist senkrecht in der Mittelebene des Zylinderkopfs 1 und des Nockenwellenlagerrahmen 5a angeordnet und genau oder ggf. mit einem geringen seitlichen Versatz in Verlängerung der Mittelachse des zugehörigen Zylinders ausgerichtet. Neben der Ausnehmung 9 ist ebenfalls in der Mittelebene durch den Zylinderkopf 1 und den Nockenwellenlagerrahmen 5a eine Zweitausnehmung 14 angeordnet, die sich schräg zu der Ausnehmung 9 ebenfalls bis in den Brennraum des Kolbens 4 erstreckt. In diese Zweitausnehmung 14 ist ein Glühstift 15 eingeschraubt, der über einen Kabelanschluß 16 mit dem elektrischen System der Brennkraftmaschine verschaltet ist.

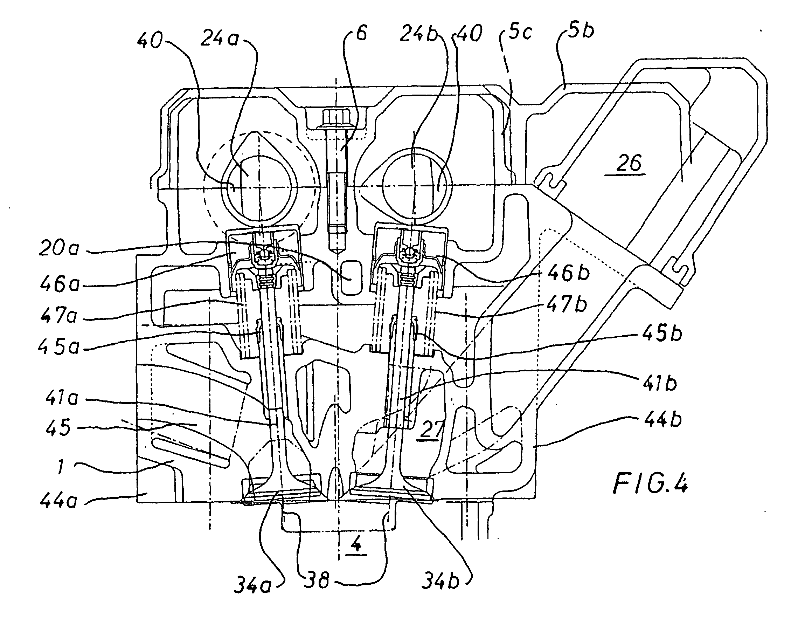

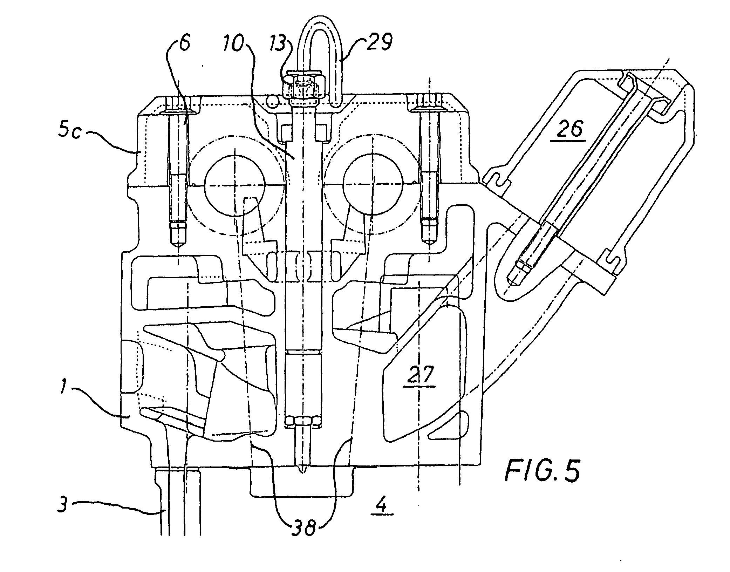

Die Ausnehmung 9 und die Zweitausnehmung 14 gehen in dem Nokkenwellenlagerrahmen 5a in einen Montageraum 17 über, der sich über nahezu die gesamte Länge des Nockenwellenlagerrahmens (Fig. 4 und Fig. 5) erstreckt. Neben der Zweitausnehmung 14 ist eine Vertiefung 18 in den Zylinderkopf eingelassen, von der eine seitliche Entsorgungsöffnung 19 zu einer Zylinderkopflängsseitenwand abgeht. Die Mündungen der Entsorgungsöffnungen 19 einer Zylinderreihe können über eine seitliche Sammelleitung miteinander (und mit einem Auffangbehälter) verbunden sein. In den Zylinderkopf 1 sind weiterhin übliche Kühlmittelräume 20b eingelassen, die von Kühlwasser durchströmt werden. Weiterhin weist der Zylinderkopf 1 eine gegossene entlang etwa der Mitte des Zylinderkopfs 1 unter seitlicher Umgehung der Ausnehmungen 9 und der Zweitausnehmungen 14 verlaufende Ölgalerie 20a auf, durch die Schmieröl zu den Schmierstellen und den Hydrostößeln geführt wird.

Im wesentlichen Unterschied zur Fig. 1 ist in den Fig. 2a und 2b der Nockenwellenlagerrahmen 5b mit einer integrierten Deckelplatte 21 ausgestattet. Dementsprechend sind in Verlängerung der Zylinderkopfschrauben 2 und neben den Nockenwellenlagerrahmen-Befestigungsschrauben 6 Öffnungen 22 vorgesehen, die durch Verschlußkappen 23a, 23b verschließbar sind. Dabei sind die Verschlußkappen 23a und 23b unterschiedlich ausbildbar. Die Brennkraftmaschine weist zwei obenliegende Nockenwellen 24a, 24b auf, deren Mittelachse durch die Trennebene 25 zwischen Zylinderkopf 1 und Nokkenwellenlagerrahmen 5b verläuft. Weiterhin ist im rechten Teil der Fig. 2 die Luftansaugleitung dargestellt, die ebenfalls von der Trennebene 25 in einen unteren und einen oberen Teil aufgeteilt ist. Die Luftansaugleitung, die auch eine Ladeluftleitung sein kann, ist über Einlaßkanäle 27 mit den Einlaßventilen eines Zylinders verbunden. Weiterhin ist die durch die Trennebene 25 von der Luftansaugleitung 26 getrennte Abdeckung 28 einstückig mit dem Nockenwellenlagerrahmen 5b ausgebildet. Im übrigen sind in Fig. 2a Abflachungen 40 an den Nockenwellen 24a, 24b dargestellt, die jeweils in der Montageposition für die Zylinderkopfschrauben 2 stehen.

In Fig. 3 ist wiederum der Nockenwellenlagerrahmen 5a mit separatem Deckel 7 dargestellt, wobei in dieser Figur insbesondere zwei unterschiedliche Verlegemöglichkeiten der Einspritzleitung 29 dargestellt sind. Die Einspritzleitung 29 ist dabei in beiden Varianten an dem seitlichen Einspritzventil-Hochdruckleitungsanschluß 13 festgeschraubt und zu der Einspritzpumpe 30, die als Hochdruck-Verteilereinspritzpumpe ausgebildet ist, geführt. Alternativ ist auch der Einsatz eines Common-Rail-Systems vorgesehen. In der ersten Variante ist die Einspritzleitung 29 durch eine Öffnung 31 geführt, die sich durch den Nockenwellenlagerrahmen 5a und ggf. den Zylinderkopf 1 auf eine Seitenwand des Zylinderkopfs 1 erstreckt. In der zweiten Variante ist die Einspritzleitung 29 außen um die Luftansaugleitung 26 herum zu der Einspritzpumpe 30 geführt. Festzuhalten ist im übrigen zu dem Deckel 7, daß dieser über Dichtleisten 32 dicht und akustisch abgekoppelt auf dem Nockenwellenlagerrahmen 5a befestigt ist und insbesondere auch zu dem mittigen Montageraum 17 abgedichtet ist. Der Montageraumverschlußdeckel 8 ist als Plastikteil ausgebildet und einfach (wie auch den Fig. 4 und 5 zu entnehmen ist) aufgeklippst.

In Fig. 5 ist ein Nockenwellenlagerrahmen 5c dargestellt, der wiederum eine integrierte Deckelplatte 21 aufweist. In dieser Variante sind die Nockenwellenlagerrahmen-Befestigungsschrauben 6 bis zu der Deckelplatte 21 geführt und gegenüber dieser abgedichtet. Die Einspritzleitung 29 ist in dieser Variante koaxial an dem Einspritzventil 10 festgeschraubt.

Der in Fig. 4 dargestellte Zylinderkopf ist soweit vollständig montiert, so daß er auf ein Kurbelgehäuse aufgesetzt werden kann. Zusätzlich zu den schon zu anderen Figuren beschriebenen Details, ist in Fig. 4 der komplett montierte Ventiltrieb mit Ein- und Auslaßventilen, Hydrostößeln und Nockenwellen dargestellt. Dabei betreffen jeweils die Bauteile mit den Bezugszeichen, die den Index a aufweisen, die Auslaßseite, während die Bauteile mit den Bezugszeichen, die den Index b aufweisen, die Einlaßseite betreffen. Die Einlaß- und Auslaßventile 34b, 34a weisen Ventilschäfte 41 auf, die in Ventilschaftführungen geführt sind. Abgedichtet werden die Ventilschäfte 41 gegenüber den Ventilschaftführungen durch Ventilschaftdichtungen 45. Direkt auf die Ventilschäfte 41 wirken - betätigt von den Nocken der Nockenwellen 24 - Hydrostößel 46, die im übrigen von der Ölgalerie 20a mit Drucköl versorgt werden. Ventilfedern 47 halten die Ein- und Auslaßventile 34b, 34a im unbetätigten Zustand in ihrer geschlossenen Position. Die Ventilschäfte 41 sind im übrigen so zu den Blockzylinderkopflängsseitenwänden 44a, 44b geneigt, daß sie einen Winkel von ca. 10° einschließen.

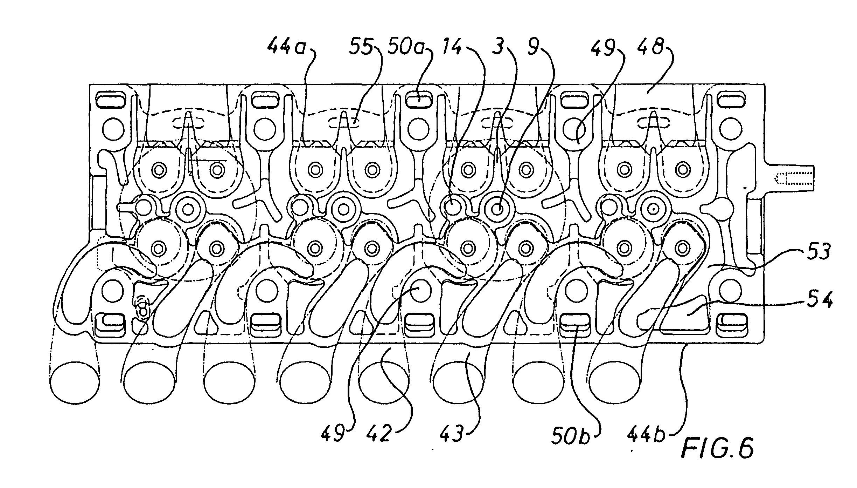

In Fig. 6 ist ein Schnitt durch den Zylinderkopf 1 dargestellt, in dem insbesondere der Verlauf der Gaswechselkanäle dargestellt ist. Die Auslaßkanäle eines Zylinders 3 sind zu einem Hosenkanal 48 zusammengefaßt und münden in der Zylinderkopflängsseitenwand 44a. Gegenüberliegend sind die Einlaßkanäle 27 des gleichen Zylinders 3 als ein Drallkanal 42 und ein Tangentialkanal 43 ausgebildet. Der Drallkanal 42 und der Tangentialkanal 43 weisen eine gemeinsame Mündungsfläche auf, die in einem stumpfen Winkel zu der Trennebene 25 angeordnet ist (siehe beispielsweise Fig. 3). Der Tangentialkanal 43 des Zylinders 3 ist so geführt, daß er von einer Zylinderquerseite (gemeint ist die Seite, die benachbart zu dem rechts danebenliegenden Zylinder angeordnet ist) über die Zylindermitte des Zylinders 3 auf die zweite Zylinderseite hin geführt ist. Der zugehörige Drallkanal 42 ist hinter einer Zylinderkopfschraubenpfeife 49 her von der zweiten Zylinderseite des Zylinders zu der ersten Zylinderseite des links danebenliegenden Zylinders geführt. Die rechteckigen Öffnungen 50a, 50b in Höhe der Zylinderkopfschraubenpfeifen entlang den Zylinderkopflängsseitenwänden 44a, 44b sind Teil eines Tragholmkonzeptes des Kurbelgehäuses und dienen gleichzeitig zur Ölabfuhr von dem Zylinderkopf 1 in das Kurbelgehäuse oder zum Transport der Blow-By-Gase aus dem Kurbelgehäuse in den Zylinderkopf bzw. Nockenwellenrahmen. Das Kühlwasser gelangt über Wasseraufstiegskanäle 55 in den Zylinderkopf 1, durchströmt diesen und wird auf der gegenüberliegenden Seite durch Wasserabstiegskanäle 54 wieder in das Kurbelgehäuse geführt. Im übrigen ist den Tangentialkanälen 43 und den Wasserabstiegskanälen 54 je ein Freiraum 53 zugeordnet.

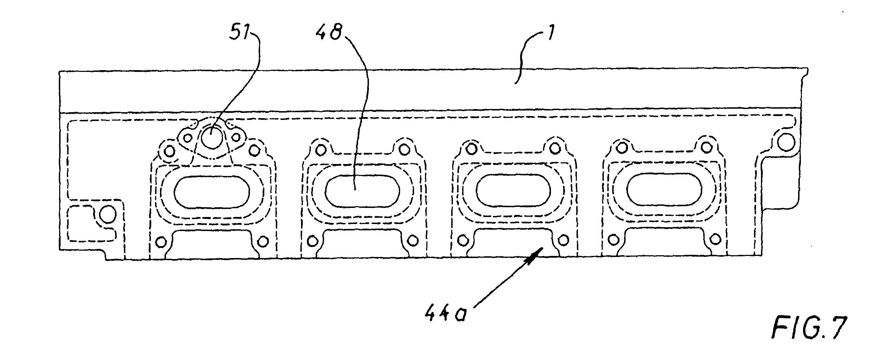

Fig. 7. schließlich zeigt eine Ansicht der Zylinderkopflängsseitenwand 44a, also der Auslaßseite. Dargestellt sind die Mündungen der einzelnen Hosenkanäle 48, die genau symmetrisch zu der jeweiligen Zylindermitte angeordnet sind. Die Abgassammelleitung wird mittels jeweils vier Schrauben je Zylinder an dem Zylinderkopf 1 befestigt. Oberhalb des Hosenkanals 48 auf der linken Seite ist ein Anschlußflansch 51 angeordnet, an dem eine Kühlmittelrückführleitung anschließbar ist. Diese Kühlmittelrückführleitung führt das durch einen Abgaskühler, der in eine Abgasrückführleitung eingeschaltet ist, hindurchgeströmte und zur Kühlung des Abgases benötigte Kühlmittel zurück zu dem Zylinderkopf.

Für den Fall, daß der Drallkanal 42 nicht in der Form, wie in Fig. 6 dargestellt, um die Zylinderkopfschraubenpfeife 46 herum zu der Längsseitenwand 44b geführt werden kann, ist in ausdrücklich alternativer Ausgestaltung auch vorgesehen, daß dieser Kanal nach oben in den Nockenwellenlagerrahmen 5b geführt wird. In dem Nockenwellenlagerrahmen 5b ist er dann zwischen den Nockenwellen 24a, 24b weiter nach oben geführt und wird dann über die Nockenwelle 24b hinweg seitlich in die Luftansaugleitung 26 hineingeführt. Der Tangentialkanal 43 ist wie in Fig. 6 dargestellt von unten in die Luftansaugleitung 26 eingeführt.

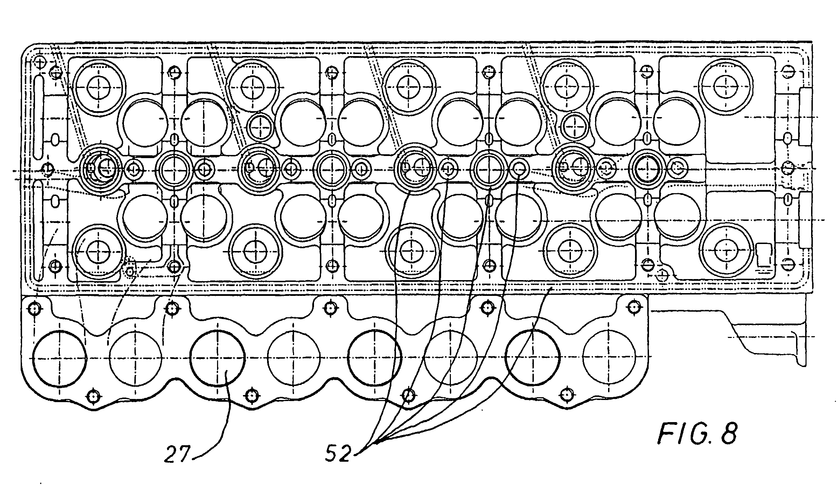

In der in Fig. 8 dargestellten Ansicht der Zylinderkopf-Anschraub-Dichtfläche zum Nockenwellenlagerrahmen sind die Dichtnutbereiche 52 dargestellt. In diese Dichtnutbereiche werden insbesondere Runddichtringe um die Ausnehmung 9 und das Einspritzventil 10 sowie die danebenliegende Zweitausnehmung 14 für den Glühstift 15 und die Bohrung für die Befestigung des Einspritzventils 10 eingelegt. Außen um den Zylinderkopf herum ist in den entsprechenden Dichtnutbereich 52 eine umlaufende Dichtung eingefügt.

## Patentansprüche

1. Selbstzündende Brennkraftmaschine mit einem Zylinderkopf, die weiterhin ein Kurbelgehäuse und eine darin drehbar gelagerte Kurbelwelle aufweist, an der jeweils mit einem Kolben verbundene Pleuel angelenkt sind, wobei der Kolben (4) in einem von dem Zylinderkopf (1) abgedeckten Zylinder (3) unter Bildung eines Brennraums bewegbar ist, wobei im Bereich des Zylinderkopfs (1) zwei Nockenwellen (24a, 24b) angeordnet sind, die je Zylinder (3) Gaswechselventile, insbesondere zwei Einlassventile (34b) und zwei Auslassventile (34a) steuern, wobei die Einlassventile (34b) und die Auslassventile (34a) mit den Ventilschäften (41a, 41b) zu den Zylinderkopflängsseitenwänden (44a, 44b) nach außen geneigt angeordnet sind, weiterhin ein Einspritzventil (10) in eine zentrale Ausnehmung (9) einsetzbar ist, die als von schmierölführenden und/oder kühlmittelführenden Räumen (20a, 20b, 20c) getrennter Bereich ausgebildet ist, und sich die Ausnehmung (9) vom Brennraum zumindest bis in Höhe der Nockenwellenachsen erstreckt,
**dadurch gekennzeichnet, dass** der Zylinderkopf (1) eine durch die Nockenwellen-Achsen verlaufende Trennebene (25) aufweist, an die sich ein Nockenwellenlagerrahmen (5a, 5b, 5c) anschließt, wobei die Nockenwellen (24a, 24b) zwischen Zylinderkopf (1) und Nockenwellenlagerrahmen (5a, 5b, 5c) gelagert sind, dass die Ausnehmung (9) sich als getrennter Bereich durch den Nockenwellenlagerrahmen (5a, 5b, 5c) hindurch erstreckt und in einen Montageraum (17) im oberen Nockenwellenlagerrahmen (5a, 5b, 5c) mündet, dass ein Glühstift (15) in eine Zweitausnehmung (14) einsetzbar ist, die als von schmierölführenden und/oder kühlmittelführenden Räumen (20) getrennter Bereich ausgebildet ist, und dass die Zweitausnehmung (14) sich vom Brennraum zumindest bis in Höhe der Nockenwellenachsen erstreckt

2. Zylinderkopf nach Anspruch 1,
**dadurch gekennzeichnet, dass** die Nockenwellen (24a, 24b) so zu den Zylinderkopfschrauben (2) angeordnet sind, dass bei eingelegten Nockenwellen (24a, 24b) und aufgeschraubten Nockenwellenlagerrahmen (5a, 5b, 5c) die Zylinderkopfschraubenköpfe in der Form zugänglich sind, dass die Nockenwellenschäfte im Bereich der Zylinderkopfschrauben (2) Abflachungen (40) aufweisen

3. Zylinderkopf nach einem der Ansprüche 1 oder 2,
**dadurch gekennzeichnet, dass** der Nockenwellenlagerrahmen (5a, 5b, 5c) zylinderkopfseitig Dichtnutbereiche (52) aufweist, in die Gummiformdichtungen und/oder Runddichtringe einsetzbar sind.

4. Zylinderkopf nach einem der vorherigen Ansprüche,
**dadurch gekennzeichnet, dass** die Einlaßkanäle (27) eine zur Trennebene (25) im stumpfen Winkel ausgebildete gemeinsame Mündungsfläche aufweisen, an die eine Luftansaugleitung (26) anschließbar ist.

5. Zylinderkopf nach einem der vorherigen Ansprüche,
**dadurch gekennzeichnet, dass** die Einlasskanäle (27) eines Zylinders (3) als ein Drallkanal (42) und ein Tangentialkanal (43) ausgebildet sind, und dass die beiden Auslasskanäle eines Zylinders (3) zu einem Hosenkanal zusammengefasst sind und im rechten Winkel zur Trennebene (25) in einer Zylinderkopflängsseitenwand (44a) münden.

6. Zylinderkopf nach Anspruch 1,
**dadurch gekennzeichnet, dass** die Zweitausnehmung (14) sich durch den Zylinderkopf (1) hindurch erstreckt und in den Montageraum (17) im oberen Nockenwellenlagerrahmen (5a, 5b, 5c) mündet.

7. Zylinderkopf nach Anspruch 5,
**dadurch gekennzeichnet, dass** zwischen dem Tangentialkanal (43) und einem Wasserabstiegskanal (54) ein Freiraum (53) angeordnet ist.

## Claims

1. Self-igniting internal combustion engine having a cylinder head which furthermore has a crankcase and a crankshaft, which is mounted rotatably in the crankcase and to which connecting rods, which are each connected to a piston, are coupled, it being possible for the piston (4) to be moveable, forming a combustion space, in a cylinder (3) covered by the cylinder head (1), two camshafts (24a, 24b) being arranged in the region of the cylinder head (1) and controlling gas exchange valves, in particular two inlet valves (34b) and two outlet valves (34a), per cylinder (3), the inlet valves (34b) and the outlet valves (34a) being arranged with the valve stems (41a, 41b) inclined outwards to the longitudinal side walls (44a, 44b) of the cylinder head, furthermore an injection valve (10) being able to be inserted into a central recess (9), which is designed as a region separated from the lubricating-oil-conducting and/or coolant-conducting spaces (20a, 20b, 20c), and the recess (9) extending from the combustion space at least to the height of the camshaft axes, **characterized in that** the cylinder head (1) has a plane of separation (25) which runs through the camshaft axes and which is adjoined by a camshaft bearing frame (5a, 5b, 5c), the camshafts (24a, 24b) being mounted between cylinder head (1) and camshaft bearing frame (5a, 5b, 5c), **in that** the recess (9) extends as a separated region through the camshaft bearing frame (5a, 5b, 5c) and leads into an installation space (17) in the upper camshaft bearing frame (5a, 5b, 5c), **in that** a sheathed-element heater plug (15) can be inserted into a second recess (14), which is designed as a region separated from the lubricating-oil-conducting and/or coolant-conducting spaces (20), and **in that** the second recess (14) extends from the combustion space at least to the height of the camshaft axes.

2. Cylinder head according to Claim 1, **characterized in that** the camshafts (24a, 24b) are arranged with respect to the cylinder head screws (2) in such a manner that, when the camshafts (24a, 24b) are inserted and the camshaft bearing frames (5a, 5b, 5c) are screwed on, the cylinder head screw heads are accessible by the camshaft stems having flattened sections (40) in the region of the cylinder head screws (2).

3. Cylinder head according to either of Claims 1 and 2, **characterized in that** the camshaft bearing frame (5a, 5b, 5c) has sealing groove regions (52) on the cylinder head, into which rubber moulded seals and/or round sealing rings can be inserted.

4. Cylinder head according to one of the preceding claims, **characterized in that** the inlet ducts (27) have a common opening area surface which is formed at an obtuse angle with respect to the plane of separation (25) and to which an air intake line (26) can be connected.

5. Cylinder head according to one of the preceding claims, **characterized in that** the inlet ducts (27) of a cylinder (3) are designed as a swirl duct (42) and a tangential duct (43), and **in that** the two outlet ducts of a cylinder (3) are combined to form a forked duct and open at right angles to the plane of separation (25) in a longitudinal side wall (44a) of the cylinder head.

6. Cylinder head according to Claim 1, **characterized in that** the second recess (14) extends through the cylinder head (1) and opens into the installation space (17) in the upper camshaft bearing frame (5a, 5b, 5c).

7. Cylinder head according to Claim 5, **characterized in that** a clearance (53) is arranged between the tangential duct (43) and a water descent duct (54).

## Revendications

1. Moteur à combustion interne à allumage spontané avec une culasse qui présente en outre un carter de vilebrequin et un vilebrequin qui y repose et qui peut y tourner, sur lequel des bielles reliées chacune avec un piston sont attelées, le piston (4) pouvant se déplacer dans un cylindre (3) recouvert par la culasse (1) moyennant réalisation d'une chambre de combustion, deux arbres à cames (24a, 24b) étant disposés au niveau de la culasse (1), lesquels arbres à cames commandent, pour chaque cylinder (3), des soupapes de distribution, en particulier, deux soupapes d'admission (34b) et deux soupapes d'échappement (34a), les soupapes d'admission (34b) et les soupapes d'échappement (34a) étant disposées avec les queues de soupape (41a, 41b) inclinées vers l'extérieur par rapport aux parois longitudinales de culasse (44a, 44b), en outre un injecteur (10) peut être mis en place dans une cavité centrale (9), qui est réalisée en tant que zone séparée des espaces (20a, 20b, 20c) amenant l'huile de lubrification et/ou le liquide de refroidissement et la cavité (9) s'étend depuis la chambre de combustion jusqu'au moins la hauteur des axes des arbres à cames, **caractérisée en ce que** la culasse (1) présente un plan de séparation (25) passant par les axes des arbres à cames auquel se raccorde un cadre de paliers d'arbres à cames (5a, 5b, 5c), les arbres à cames (24a, 24b) reposant entre la culasse (1) et le cadre de paliers d'arbres à cames (5a, 5b, 5c), **en ce que** la cavité (9) s'étend, en tant que zone séparée, à travers le cadre de paliers d'arbres à cames (5a, 5b, 5c) et aboutit dans un espace de montage (17) dans le cadre supérieur de paliers d'arbres à cames (5a, 5b, 5c), **en ce qu'**une bougie de préchauffage (15) peut être mise en place dans une deuxième cavité (14) qui est réalisée an tant que zone séparée des espaces amenant l'huile de lubrification et/ou le liquide de refroidissement (20) et **en ce que** la deuxième cavité (14) s'étend depuis la chambre de combustion jusqu'au moins la hauteur des axes des arbres à cames.

2. Culasse selon la revendication 1, **caractérisée en ce que** les arbres à cames (24a, 24b) sont disposés par rapport aux vis de culasse (2) de manière telle qu'avec les arbres à cames (24a, 24b) en place et avec le cadre de paliers d'arbres à cames (5a, 5b, 5c) vissé, les têtes des vis de culasse sont accessibles dans la configuration dans laquelle les corps d'arbres à cames présentent des aplatissements (40) au niveau des vis de culasse (2).

3. Culasse selon l'une quelconque des revendications 1 ou 2, **caractérisée en ce que** le cadre de paliers d'arbres à cames (5a, 5b, 5c) présente, côté culasse, une zone de rainure d'étanchéité (52) dans laquelle des joints moulés en caoutchouc et/ou des bagues d'étanchéité toriques peuvent être mis en place.

4. Culasse selon l'une quelconque des revendications précédentes, **caractérisée en ce que** les canaux d'admission (27) présentent une surface d'embouchure commune réalisée selon un angle obtus par rapport au plan de séparation (25) et sur laquelle une conduite d'admission d'air (26) peut être raccordée.

5. Culasse selon l'une quelconque des revendications précédentes, **caractérisée en ce que** les canaux d'admission (27) d'un cylindre (3) sont réalisés en tant que canal à courant tourbillonnaire (42) et que canal tangentiel (43) et **en ce que** les deux canaux d'échappement d'un cylindre (3) sont rassemblés en un canal en Y et débouchent dans une paroi longitudinale de culasse (44a) selon un angle droit par rapport au plan de séparation (25).

6. Culasse selon la revendication 1, **caractérisée en ce que** la deuxième cavité (14) s'étend à travers la culasse (1) et débouche dans l'espace de montage (17) dans le cadre supérieur de paliers des arbres à cames (5a, 5b, 5c).

7. Culasse selon la revendication 5, **caractérisée en ce qu'**un espace libre (53) est prévu entre le canal tangentiel (43) et un canal de descente d'eau (54).
